# EUROPEAN PATENT APPLICATION

(11) **EP 4 815 409 A1**
(43) Date of publication of application: **30.09.2026**
(21) Application number: 25290012.1
(22) Date of filing: 26.03.2025
(51) Int. Cl.: H04L 67/12, G01S 7/00, H04W 4/38, H04W 28/06

(54) **PROCESS AND SYSTEM FOR COLLECTING INFORMATION BY A CENTRAL UNIT FROM AT LEAST ONE REMOTE UNIT**

(71) Applicant: Mitsubishi Electric R&D Centre Europe B.V., 1119 NS Schiphol Rijk Amsterdam (NL); MITSUBISHI ELECTRIC CORPORATION, Chiyoda-ku Tokyo 100-8310 (JP)
(72) Inventor: Bechihi, Adel, 35708 RENNES CÉDEX 7 (FR); Sibel, Jean-Christophe, 35708 RENNES CEDEX 7 (FR)
(74) Representative: Plasseraud IP

(57) **Abstract**

A process for collecting information by a central unit (100) from at least one remote unit (1, 2) comprises determining a selection to be applied to information available at the remote unit and applying the determined selection to the available information by said remote unit. The selection may be determined either by the central unit or at each remote unit, depending on alternative implementations. The process allows exploiting redundancy for various purposes, including reducing a radiocommunication payload, or providing increased reliability, or also focusing sent information on a target. The process may be used for applications that involve exploration of an environment and building a digital representation of a content of the environment, by collecting sensing results obtained by the at least one remote unit.

## Description

The invention relates to a process for collecting information by a central unit from at least one remote unit. It also relates to a system that implements such process.

### -- BACKGROUND OF THE INVENTION --

Multi-sensor systems offer significant advantages in various applications, such as autonomous vehicles, surveillance and environmental monitoring, path planning, trajectory optimization and obstacle avoidance, mobile object tracking, etc. By collecting data from multiple sensors, such as LiDARs, cameras and/or radars, these systems can create a digital representation of an environment. One benefit of the multi-sensor systems is enhanced accuracy and reliability allowing better decision-making processes. Additionally, multi-sensor operation allows for better performance in adverse conditions. In particular, redundancy of the information that is provided by such multi-sensor system brings an additional level of robustness against component failures. This ensures that even if one of the sensors fails or is obstructed, the system can still operate efficiently by relying on the other sensors.

However, integration of multiple sensors introduces communication issues. A major one is the need for high bandwidth to transmit in real-time large amounts of data generated by the sensors, in particular when radio transmission is used. This requirement can be challenging for existing radiocommunication networks, especially in densely populated areas or environments with significant level of interference. Moreover, ensuring low latency is critical for applications that require real-time decision-making, such as autonomous vehicles, control of mobile robots, target tracking or intrusion detection. Any delay in data transmission may cause suboptimal performance or even generate safety issues like car accidents. Another issue is synchronization and homogenisation of data that originate from different sensors for allowing efficient data fusion. Indeed, the sensors may have different sampling rates and data formats, requiring complex algorithms to align and fuse the data accurately. Additionally, the communication process should be robust enough to handle possible failures and maintain continuous operation of the system.

Information redundancy in multi-sensor systems can be exploited either to significantly reduce communication payload and allow more efficient and rapid construction of a digital knowledge, or to provide increased information reliability. Redundancy means that several sensors provide respective pieces of information having mutual relationship or connection. In particular, said pieces of information are said to be redundant or overlapping when they share some common content. Therefore, it is a further issue to allow managing information overlaps in a smart way depending on current transmission and computational resources and/or requirements for the collected information in each application.

Several techniques have already been proposed for addressing these issues, including the following ones:
data fusion, where information from various sensors is processed locally at the data source before transmission, selecting only the most relevant and unique information;
compression techniques to reduce payload size before transmission;
selective data transmission, where in case of several sensors detecting a same object or event, the system prioritizes and transmits data from the most reliable sensor, or the one that provides the highest resolution or most critical information; and
edge-computing, where the data are processed at the edge of the network, close to their source, allowing to filter out unnecessary information and transmit only high-value processed data.

Then, the present invention aims at addressing at least one of the above-mentioned issues in an improved manner compared to already-existing operations. In particular, it aims at allowing improved management of transmission payload and/or better exploitation of redundancy.

### -- SUMMARY OF THE INVENTION --

For meeting at least one of these objects or others, a first aspect of the present invention proposes a new process for collecting information by a central unit from at least one remote unit through a radiocommunication link that connects the central unit with the remote unit. In the process, the remote unit sends to the central unit at least part of an information that is available at this remote unit, then the central unit combines the sent part of the available information with an already-collected information. According to the invention, the part of the available information that is sent by the remote unit results from a selection that is applied to the information available at this remote unit or applied to at least one information obtaining parameter implemented by the remote unit. The selection is determined for the sent part of the available information to meet at least one among information-related requirements, radiocommunication requirements, processing requirements and storage requirements. Without limitation, the information-related requirements may include at least one of an information enrichment criterion relating to collected information, a resolution of the collected information and/or of the sent part of the available information, redundancy considerations, etc. In applications directed to building a digital representation of an environment content, the information-related requirements may also include a point cloud density that relates to the sent part of the available information with respect to information sent by at least one another remote unit and/or with respect to already collected-information, etc. Generally for the invention and also without limitation, the radiocommunication and processing requirements may include at least one of a communication payload limitation, a computation complexity, a processing rate, a maximum transient storage capacity, etc.

Hence, the selection that is implemented at the remote unit allows reducing the information amount that is sent thereafter to the central unit compared to the whole information that is available at this remote unit. Thus, it is possible to meet limitations such as a maximum bandwidth of the radiocommunication link used by each remote unit, or of a radio channel that may be common to several remote units if such radiocommunication architecture is used.

Alternatively of in combination with the selection being determined for meeting radiocommunication and processing requirements, it may also be determined so as to optimize a redundancy of the part of the available information sent by the remote unit with respect to the already-collected information and possibly also with respect to at least one another information part to be sent by at least one another remote unit to the central unit. In various implementations, redundancy optimization may relate to reducing overlaps between newly-collected information and already-collected information or between respective information parts collected from several remote units. Conversely, redundancy optimization may relate to prioritizing information overlaps for providing increased reliability or for focusing sent information on a target, in particular for more accurate and/or rapid tracking of this target.

Advantageously, the invention process may comprise preliminary transmission(s) between each remote unit and the central unit. This (these) preliminary transmission(s) may be useful for determining the selection to be applied to the information that is available at the remote unit. Thus, the invention process involves cooperation between each remote unit and the central unit for collecting information in an optimized way considering the information-related requirement(s) and/or the radiocommunication and processing requirement(s).The content of the preliminary transmission(s) may be of any type, in particular obtained through a selection or sampling or resolution reduction of sensing results that form the information available at the remote unit, or an indication of an environment portion concerned with the information to be sent, including one or more ranges for a pointing direction effective for the information to be sent, metadata relating to the information to be sent, high-level data relating to the information to be sent, including indication of recognized objects, designation of a target, etc. Generally, this (these) preliminary transmission(s) involve(s) only low-payload messages, and may be transmitted through a control channel between the remote unit(s) and the central unit.

Generally, determination of the selection to be applied to the information available at the remote unit is a smart or high-level task which can be executed either at the central unit or the remote unit, depending on implementations of the invention.

In first implementations such that the selection is determined at the central unit, the process may comprise the following steps:
- sending of a characterization of a proposed available information by the remote unit to the central unit; then
- by the central unit, determining the selection based on the characterization of the proposed available information; then
- responsive to the characterization of the proposed available information, sending of a request for information to be collected, by the central unit to the remote unit, this request containing a characterization of the selection;
- by the remote unit: selecting the part of the available information by implementing the selection with the information available at this remote unit, and sending the selected part of the available information to the central unit responsive to the request; then
- by the central unit: combining the selected part of the available information with already-collected information.

In second implementations such that the selection is mainly determined at the remote unit, the process may comprise the following steps:
- sending of a synthesis of already-collected information by the central unit to the remote unit; then
- by the remote unit, determining the selection based on the synthesis of the already-collected information; then
- responsive to the synthesis of the already-collected information, sending of a characterization of a proposed available information by the remote unit to the central unit, the proposed available information corresponding to the selection; then
- by the central unit, confirming or refining the selection to be applied for obtaining the part of the available information to be sent, based on the characterization of the proposed available information; then
- responsive to the characterization of the proposed available information, sending by the central unit to the remote unit, of a request that contains a characterization of the confirmed or refined selection; then
- by the remote unit: selecting the part of the available information by implementing the confirmed or refined selection, and sending the selected part of the available information to the central unit responsive to the request; then
- by the central unit: combining the selected part of the available information with the already-collected information.
Thanks to the remote unit being supplied with the synthesis of the already-collected information before it sends its characterization of the proposed available information, such second implementations allow the proposed available information to be selected among all information available at the remote unit considering the information already collected by the central unit. The task of determining the selection is distributed between the remote unit and the central unit, allowing optimal selection determination, in particular for taking into account redundancy between several remote units.

In third implementations also such that the selection is determined at the remote unit, the process may comprise the following step:
- sending of a synthesis of already-collected information by the central unit to the remote unit, in a request or as a request for information to be collected; then
- by the remote unit, determining the selection based on the synthesis of the already-collected information, selecting the part of the available information by implementing the selection, and sending the selected part of the available information to the central unit responsive to the synthesis of the already-collected information; then
- by the central unit: combining the selected part of the available information with the already-collected information.
In such third implementations, the remote unit can determine a selection for its available information, that will enrich the information already collected by the central unit. The remote unit then applies this selection to its available information and sends the so-selected information to the central unit. Such third implementations reduce communication payload involved in the preliminary transmission(s), since the task of selection determination is assigned to the remote unit only.

Generally, the characterization of the proposed available information and/or the synthesis of the already-collected information when used are low-payload messages, compared to the corresponding information content as obtained or obtainable by the sensing unit or already collected by the central unit.

For possible applications of the invention process, the information collected by the central unit may comprise map data relating to elements existing in an environment of the remote unit. For such applications, the information available at the remote unit may comprise sensing results which are obtained by the remote unit performing measurements of the environment. Possibly, the sensing results obtained by the remote unit may form a point cloud, an image, a video, a sequence of images, etc. Also possibly, the remote unit may be equipped with a sensing system for performing the measurements, such that each sensing result comprises coordinates of at least one point in the environment where a radiation-reflecting or radiation-diffusing element has been sensed by the sensing system. Preferably, the sensing system may be at least one of a LiDAR system, a video camera, a depth camera system, a three-dimensional camera system, a stereo imaging system and a radar system.

For implementations that involve preliminary transmission(s) and where the collected information comprises map data relating to the environment of the remote unit, a step sequence that comprises transmission of at least one of the characterization of the proposed available information and the synthesis of the already-collected information, and the sending of the selected part of the available information, may be performed repetitively in real time or almost real time with respect to the measurements performed by the remote unit on the environment.

For the above-mentioned first and second implementations, the characterization of the proposed available information may comprise at least one of a pointing direction within a sensing field of the remote unit for the measurements on the environment, an extent of the sensing field of the remote unit for the measurements on the environment, a resolution or definition or density of the measurements on the environment, a sampled or compressed version of the sensing results obtained by the remote unit, an indication of a sub-portion of the environment, and an indication of at least one element recognized in the environment. In the particular case of a compressed version of the sensing results obtained by the remote-unit, it may involve spatial compression, or time-compression or mixed spatial- and time-compression.

For the above-mentioned second and third implementations, the synthesis of the already-collected information may comprise a sampled or compressed version of this already-collected information. Spatial compression, or time-compression or mixed spatial- and time-compression may be used in this case too. Other content types listed above for the characterization of the proposed available information may also be used for the synthesis of the already-collected information.

Generally for the invention, the selected part of the available information that is sent by the remote unit to the central unit may be a subset of information data that have been obtained by the remote unit before the selection is determined. Thus, the information to be sent can be selected after this information has been obtained by the remote unit.

Alternatively, the selected part of the available information that is sent by the remote unit to the central unit may be obtained by the remote unit after the selection is determined, the selection being applied to at least one information obtaining parameter implemented by this remote unit. Such information obtaining parameter may be a field of view or a pointing direction to be used for new measurements, for example. Such alternative implementation allows limiting the measurements that are performed by the remote unit to the information to be sent to the central unit. Useless information acquisition is thus avoided.

A second aspect of the invention proposes an information collecting system that comprises a central unit and at least one remote unit each provided with radiocommunication means, wherein:
- the central unit comprises a combiner module configured for combining newly-received information with already-collected information;
- the central unit and/or each remote unit comprises a selection determination module configured for determining a selection to be applied to information available at the remote unit, and
- each remote unit comprises a selection module configured for implementing the selection with the information available at this remote unit so as to select a part of this available information to be sent to the central unit,
and the central unit and the at least one remote unit are configured for implementing a process according to the first invention aspect.

Generally for the invention, the at least one remote unit may comprise a remote unit that is fixedly located in an environment, or may form a mobile unit, preferably an unmanned mobile unit, in particular an unmanned aerial vehicle commonly referred to as UAV. A fixedly located remote unit may suit applications where an indoor environment is explored, and mobile units may suit for exploring many environments, including indoor or outdoor environments, especially disaster-stricken and hostile environments.

These and other features of the invention will be now described with reference to the appended figures, which relate to preferred but not-limiting implementations of the invention.

### -- BRIEF DESCRIPTION OF THE DRAWINGS --

Figure 1 shows an information collecting system which is suitable for implementing the invention.
Figure 2 is a block-diagram which shows components internal to one remote unit of the data collecting system of Figure 1.
Figures 3, 4 and 5 display respective communication sequences used in three possible implementations of the invention.

As a rule, same reference signs and notations which are indicated in different ones of these figures denote identical elements of elements with identical function.

### -- DETAILED DESCRIPTION OF THE INVENTION --

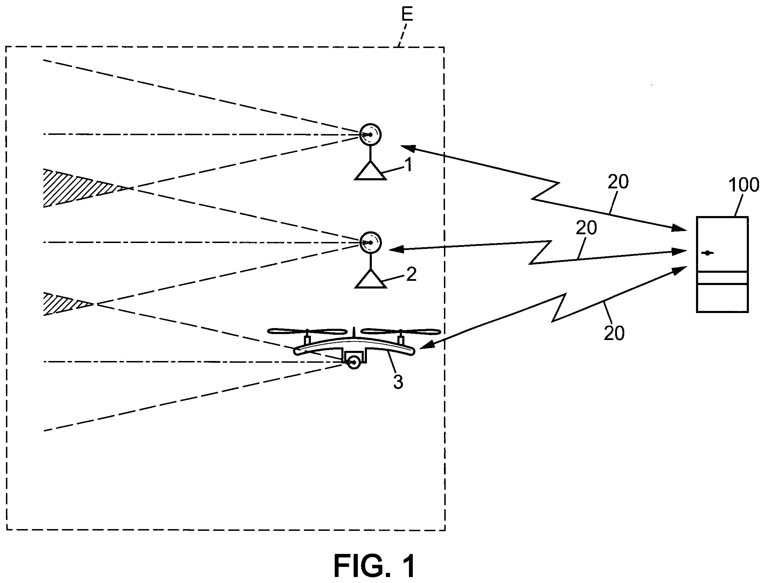

Referring to Figure 1, an information collecting system comprises a central unit 100 and at least one remote unit, possibly several remote units. Each remote unit may be a fixedly located sensing unit or a mobile sensing unit. The figure shows two fixedly located sensing units 1 and 2 and one sensing unit 3 of UAV-type as an example but more sensing units may be advantageous for some applications and also other sensing unit types. The sensing units are used for acquiring information about a content of an environment E by performing measurements on this content. The central unit 100 may comprise an application server with computational and storage means, configured for collecting and processing information transmitted by the sensing units 1-3 about the environment content, and using this information for building a digital representation of the content of the environment E. In particular, the central unit 100 may be configured to perform operations such as information analysis, information comparison, information selection, information merging, data aggregation, information classification and possibly also high-level operations such as object recognition and target tracking. In particular, data aggregation may be performed by a dedicated combiner module within the central unit 100. The information data that are collected by the central unit 100 may be comprised of data points, in particular when these data are sensing results obtained using active radiation-based systems, but other data formats may be used alternatively or in combination such as images or matrix data.

Each sensing unit 1-3 is connected to the central unit 100 by a radiocommunication link 20 which may be of any type and may comprise a bidirectional control channel and a unidirectional data channel for transmissions from the sensing units 1-3 to the central unit 100. Other radiocommunication architectures may be used alternatively. As usual, each radiocommunication channel is limited by a respective bandwidth which sets an upper limit to the data transmission rate from the corresponding sensing unit. When real-time or almost real-time data collection is desired with respect to changes occurring in the environment E, this bandwidth also sets a maximum size for the radiocommunication payload that is transmitted each time the collected information is updated. In addition, the transmissions from the sensing units 1-3 to the central unit 100 may involve radiocommunication resources that are shared by these sensing units 1-3. Then, a maximum limit also applies to the sum of the respective transmission rates of the sensing units 1-3. The respective bandwidth and such maximum sum limit form radiocommunication requirements which are to be met for allowing real-time or almost real-time information collection. Similarly, processing requirements may also be involved, again including respective limits that relate separately to the individual sensing units 1-3 but also a further limit that relates to shared processing capacities, in particular the processing capacities of the central unit 100. Other radiocommunication requirements may relate to signal-to-noise ratio(s), quality of service, etc. Individual and collective limits may also relate to storage capacities or other hardware components. Determination of such requirements, including radiocommunication-, processing- and storage requirements, within a multi-unit system is known in the art so that further description thereof is unnecessary here.

When several of the sensing units are spatially located close to each other or when their respective pointing directions are orientated toward one same portion of the environment E, redundancy may occur between the measurements that are performed by these sensing units. Hatched areas in Figure 1 symbolically shows redundancy areas within the environment E. Such redundancy, also referred to spatial redundancy, may result in overlaps between the information originating separately from the sensing units, and the present disclosure allows exploiting such overlaps advantageously. A way to exploit the spatial redundancy consists in reducing or suppressing the information overlaps for decreasing the radiocommunication payload, and thus meeting more easily the radiocommunication, processing and storage requirements. Alternatively, spatial redundancy may be used for increasing reliability of collected information, and may help toward meeting information-related requirements such as reaching a data point density threshold or a resolution level in some environment portions, or focusing on a target from several observation points.

Due to using at least one fixedly located sensing unit, the information collecting system of Figure 1 may preferably be dedicated to exploring an indoor environment, but it could also be used outdoors. Information collecting systems that only comprise mobile sensing units may also be used for some applications.

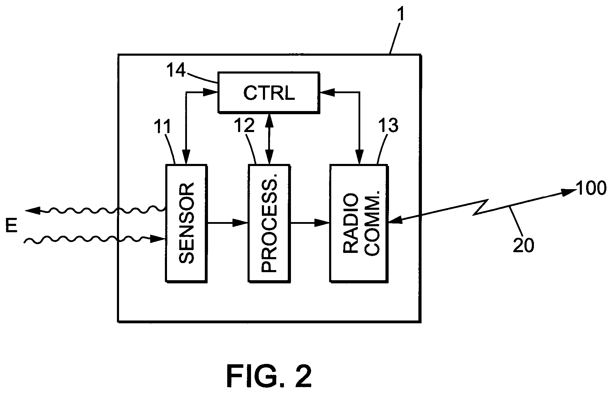

In the embodiment represented in Figure 2, the sensing unit 1 can perform LiDAR measurements with content elements of the environment E. Other measurement systems such as camera-based or radar systems may be used in combination with or alternatively to a LiDAR system at the sensing unit 1. In particular, LiDAR systems can have high-resolution three-dimensional mapping capabilities, which are beneficial for detecting and classifying objects accurately, thereby allowing a comprehensive representation of the environment content. For instance, while camera-based systems might struggle in low-light conditions, LiDAR systems can operate efficiently regardless of lighting conditions, and radar systems can penetrate through some objects, including rain, or fog, or vegetal cover in land areas, and provide extended fields of view.

Components internal to the sensing unit 1 may comprise:
- the sensing system 11, noted SENSOR, for performing the measurements with the environment content according to a variable pointing direction. Figure 2 symbolically shows LiDAR radiation emitted toward the environment E and sensed backscattered radiation;
- a data processing unit 12, denoted PROCESS. and suitable for processing sensing results produced by the sensing system 11;
- a radiocommunication unit 13, denoted RADIO COMM. and suitable for communicating with the central unit 100 through the radiocommunication link 20; and
- a controller module 14, denoted CTRL and configured for controlling coordinated operations of the preceding components of the sensing unit 1.
The sensing unit 3 of UAV-type additionally includes a flying carrier for carrying components 11-14 onboard this carrier.

Depending on implementations of the invention, the data processing unit 12 may be configured to perform operations such as information analysis, information comparison, information classification and selection, and possibly also high-level operations such as object recognition and target tracking. In particular, a selection module may be dedicated with the data processing unit 12 to implement a determined selection with the sensing results produced by the sensing means 11. A selection determination module, dedicated to determining the selection(s) to be applied to the sensing results produced by the sensing units 1-3 may be provided either within the central unit 100 and/or within the sensing units 1-3, depending on the invention implementations.

The below disclosure relates to a data collection process to be implemented between each sensing unit 1-3, and the central unit 100. This process allows smart selection of the sensing results that are sent to the central unit 100, with several variants allowing the selection to be determined either at the central unit 100 or at the sensing units 1-3. For parallel implementation with several or all of the sensing units of the information collecting system, at least some of the communications from the central unit 100 may use multicast transmission, so that the sensing units 1-3 simultaneously receive these communications. Also in a usual way, an initializing step may consist in a registration of each sensing unit 1-3 at the central unit 100, in particular for indicating respective capacities of these sensing units, a type of their respective sensing systems, communication features special to the sensing units, etc. Such registration step is common in the field of cooperating units.

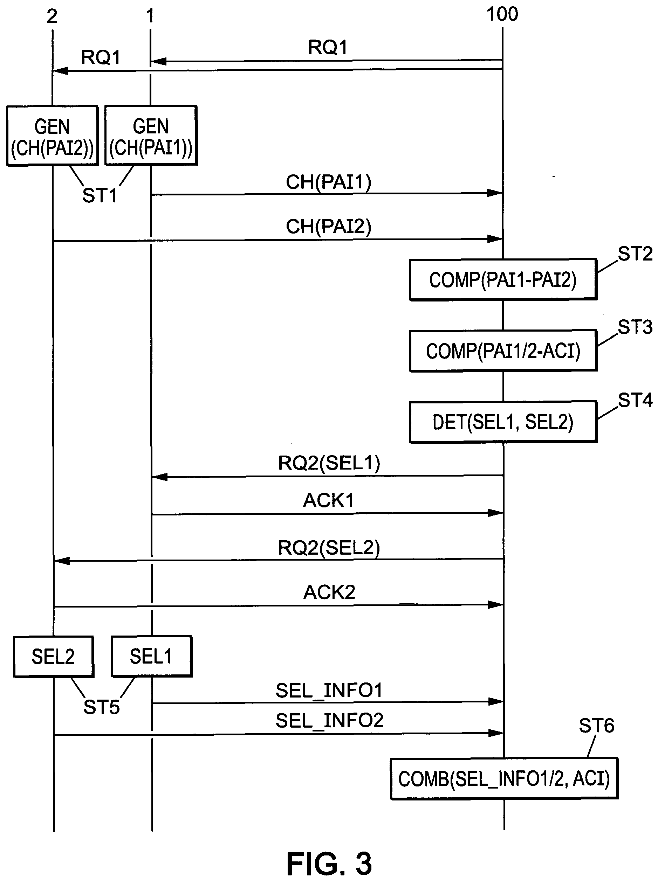

A first implementation allowing the selection to be determined at the central unit 100 is now described with reference to Figure 3. Vertical lines in this figure represent each of the sensing units 1, 2 and central unit 100 as communication nodes, and horizontal arrows represent radio-transmissions from the sensing units 1 or 2 to the central unit 100 or in reverse direction. The description is continued for both sensing units 1 and 2 only for clarity sake, but it can be extended to any number of sensing units without difficulty. RQ1 is a request from the central unit 100, for each sensing unit to send back a characterization of a proposed available information. Each proposed available information may be characterized using any form, including low-level form such as a sampling of already-obtained sensing results or a compressed content built from these already-obtained sensing results, or a characterization of a sensing field corresponding to the already-obtained sensing results, including a range for a pointing direction of the sensing system 11 and/or an extent of its field of view, or high-level form such as indication of a recognized object or a target. One or several of these information formats may be indicated in the request RQ1. Alternatively, the proposed available information may not be comprised of already-obtained sensing results but relate to sensing parameters, e.g. pointing direction, extent of the field of view, resolution, etc, that can be used for measurements to be performed. It is also possible that the request RQ1 does not contain any indication of format to be used for the proposed available information. Then, a default format is to be used by each of the sensing units, for example depending on the type of its sensing system 11 and capabilities, the quality of the radiocommunication link 20, etc.

Step ST1 consists in each sensing unit 1, 2 generating a characterization of its own proposed available information, i.e. a characterization of its proposed available sensing results for the applications considered in the present example. CH(PAI1) denotes the characterization to be sent by the sensing unit 1, of the available information that is proposed by this sensing unit 1. Similarly, CH(PAI2) denotes the characterization to be sent by the sensing unit 2, of the available information that is proposed by this sensing unit 2. The characterization generation step ST1 is thus noted GEN(CH(PAI1)) (respectively GEN(CH(PAI2)) for the sensing unit 1 (resp. 2). When the sensing system 11 of the sensing unit 1, 2 is of LiDAR type, the sensing results are of the point-cloud data type, and several lossy point-cloud compression algorithms which are well-known to the Man skilled in data field may be used in step ST1. One possible compression algorithm is the point-cloud octree encoding method also referred to as octree clustering method or point-cloud octree compression. As a reminder, point-cloud octree encoding is a sophisticated technique used to efficiently store, transmit, and manage three-dimensional point cloud data. For image-type data which are available at the sensing units 1, 2, known methods such as JPEG (Joint Photographic Experts Group) and JPEG 2000 may be used, which employ techniques like Discrete Cosine Transform (DCT) and wavelet transforms to achieve high compression ratios while maintaining acceptable image quality. For video-type data, compression standards like H.264 (AVC) and H.265 (HEVC) are widely used, which utilize techniques such as inter-frame and intra-frame encoding, motion compensation, and entropy coding to significantly reduce file sizes while preserving video quality.

Possibly, at least one of the characterizations CH(PAI1), CH(PAI2) may comprise a motion field generated in step ST1 by the corresponding sensing unit 1 from the available information. Such motion field may be derived from each information available at the sensing unit 1, 2 to represent an evolution of the environment content over time. This may be useful for applications as target tracking, analysis of moving objects, navigation and dynamic scene understanding. For point-cloud data, it involves determining motion vectors of data points in the point cloud formed by the sensing results. In particular for addressing the issue of no fixed coordinate framework being available, a variant of the well-known Iterative Closest Point (ICP) algorithm may be used to detect the changes between successively obtained point clouds. Mathematically, this can be expressed as minimizing the following modified sum of squared distances: $J \left(T\right) = {\sum }_{i = 1}^{{N}_{{p}^{\left(t+1\right)}}} {\sum }_{j = 1}^{{N}_{{p}^{\left(t+1\right)}}} {a}_{i , j} {\left‖{p}_{i}^{\left(t\right)}-T\left({p}_{j}^{t + 1}\right)\right‖}^{2}$ where T is a spatial transformation, pᵢ^{(t)} are the data points in a first point cloud relating to time instant t and containing N_{p^{(t)}} points, pⱼ^{(t+1)} are the corresponding points in a second point cloud relating to time instant t+1 and containing N_{p^{(t+1)}} points, and *a_{i,j}* are Boolean coefficients indicating whether there is a correspondence between the i-th point from the first point cloud and the *j*-th point from the second point cloud. Unlike the application of ICP algorithm to point-cloud registration, application to motion detection focuses on non-correspondences to detect the changes occurring between the time instants t and t+1. The detected changes reveal object motion existing in the environment portion concerned with the first and second point clouds.

Each sensing unit 1 (respectively 2) then responds to the request RQ1 by sending a respective message that contains the characterization CH(PAI1) (resp. CH(PAI2)) of its own proposed available information. The characterizations CH(PAI1) and CH(PAI2) form low-volume radiocommunication payloads, so that they can each be transmitted through bidirectional control radio channels.

Then, in a step ST2 executed internally to the central unit 100 and denoted COMP(PAI1-PAI2), the proposed available information PAI1 from the sensing unit 1 and that PAI2 from the sensing unit 2 are compared. To this end, both sensing result sets that form separately the information contents PAI1 and PAI2 may first be aligned, for example using a point cloud registration method. The goal of point-cloud registration is to find a spatial transformation, including translation, rotation and scaling, that best aligns the point clouds into a common coordinate framework. Best alignment consists in finding the maximum number of correspondences between points from the first point cloud and points of the second point cloud. One common method to this end is the Iterative Closest Point (ICP) algorithm, which iteratively refines the spatial transformation by minimizing a distance between corresponding points in the point clouds. Mathematically, this can be expressed as minimizing the following sum of squared distances: $J \left(T\right) = {\sum }_{i = 1}^{{N}_{p}} {\sum }_{j = 1}^{{N}_{q}} {a}_{i , j} {\left‖{p}_{i}-T\left({q}_{j}\right)\right‖}^{2}$ where T is again the spatial transformation, pᵢ are the data points in the first point cloud containing Nₚ data points, i.e. the point cloud formed by the proposed available information PAI1, qⱼ are the corresponding data points in the second point cloud containing N_{q} data points, i.e. the point cloud formed by the proposed available information PAI2, and a_{i,j} are Boolean coefficients indicating whether there is a correspondence between the i-th data point from the first point cloud and the j-th data point from the second point cloud. In equation eq. 2, all data points pᵢ and qⱼ are assumed to relate to a same time instant.

Then, any method known in the art for quantifying similarity or divergence between both information contents PAI1 and PAI2 may be used, in particular those referred to as Kullback-Leibler (KL) divergence, Peak Signal-to-Noise Ratio (PSNR), and Structural Similarity Index (SSIM). These methods are widely used in various fields such as information theory, signal processing, computer vision and image analysis. KL-divergence measures how one probability distribution is similar to a second probability distribution. This method can be used to compare Gaussian mixture distributions which are suitable to represent point-cloud data. PSNR is a ratio that measures the quality of a signal compared to the noise and it is often used in image compression and video encoding to assess the fidelity of reconstructed images. SSIM is a method for measuring the similarity between two images. It considers changes in luminance, contrast, and structure.

So-executed step ST2 allows in particular identifying overlaps that may exist between the proposed available information contents PAI1 and PAI2.

Step ST3 also executed at the central unit 100 and denoted COMP(PAI1/2-ACI), consists in comparing each of the proposed available information contents PAI1 and PAI2 with the information already collected ACI that is stored at the central unit 100. The point cloud registration method and similarity- or divergence quantifying methods just mentioned for step 101 may be used again. Step ST3 allows identifying overlaps that may exist between the already-collected information ACI and each of the proposed available information contents PAI1 and PAI2. In particular, such overlaps may result from time redundancy due to measurements that have been performed at different time instants but on same still or motionless objects contained in the environment E. If the step sequence that is currently described is executed for the first time in the process of collecting information on the environment E, step ST3 is skipped.

Then, in step ST4 denoted DET(SEL1, SEL2), the central unit 100 determines respective selections to be applied by the sensing units: selection SEL1 intended to the information available at the sensing unit 1 and SEL2 intended to the information available at the sensing unit 2. This selection determination is executed taking into account information-related requirements and/or radiocommunication requirements and/or processing requirements and/or storage requirements as exemplified before in the present description. Selection determination methods known in the art may be used for step ST4. Generally, reducing or suppressing information overlaps can be useful for meeting the radiocommunication, processing and storage requirements. For example, a Voronoi-type method may be used for suppressing information overlaps existing between the proposed available information contents PAI1 and PAI2 caused by spatial redundancy. Conversely, the selections SEL1 and SEL2 may be determined in step ST4 for voluntarily producing information overlaps therebetween and/or with the already-collected information ACI. The information-related requirements and/or the radiocommunication, processing and storage requirements constitute inputs for step ST4. The determined selections SEL1 and SEL2 assign to the sensing units 1 and 2 respective portions of the environment E for selecting the sensing results that relate to these environment portions among the information contents that are separately available at the sensing units. The selections SEL1 and SEL2 may further contain additional selection criteria such as point density, resolution or definition of the sensing results, etc.

Thereafter, the central unit 100 sends a request RQ2(SEL1) that contains the determined selection SEL1, to the sensing unit 1. It also sends another request RQ2(SEL2) that contains the determined selection SEL2, to the sensing unit 2. Each selection SEL1, SEL2 may be expressed in different ways, including the formats recited above for the characterization of the proposed available information. Once the request RQ2(SEL1) (resp. RQ2(SEL2)) is received by the sensing unit 1 (resp. sensing unit 2), this latter acknowledges with message ACK1 (resp. ACK2) and implements the selection SEL1 (resp. SEL2) with the already-obtained sensing results which are stored at this sensing unit 1 (resp. sensing unit 2) and/or with sensing parameters to be used for performing new measurements. Implementations of the selections SEL1 and SEL2 respectively and in parallel by the sensing units 1 and 2 are labelled with reference sign ST5 in Figure 3. The requests RQ2(SEL1) and RQ2(SEL2) and the acknowledgment messages ACK1 and ACK2 may be transmitted using again the bidirectional control radio channels.

The selected information contents SEL_INFO1 and SEL_INFO2, are then transmitted by each of the sensing units 1 and 2 to the central unit 100 in respective messages. These messages may preferably be transmitted using unidirectional data radio channels. Advantageously, the selected information contents SEL_INFO1 and SEL_INFO2 may be compressed using a lossless point-cloud compression algorithm before being incorporated into the respective messages to the central unit 100.

The central unit 100 is then able to combine the selected information just received with already-collected information, in particular by implementing an information aggregation process, in a step ST6 noted COMP(SEL_INFO1/2, ACI). Suitable algorithms for fusing or merging the selected information contents SEL_INFO1 and SEL_INFO2 with the already-collected information ACI, in this step ST6, are known in the art, for example point-cloud registration methods, namely the Iterative Closest Point (ICP) algorithm, or image blending methods.

In an optional further step (not represented) executed at the sensing units 1 and 2, the unselected part of each available information may be compressed using a lossy compression algorithm, possibly in accordance with an accuracy level that has been previously specified by the central unit 100, for example in the requests RQ2(SEL1) and RQ2(SEL2). The compression algorithms previously mentioned in connection with step ST1 may also be used for the unselected part of the available information. A motion field may also be derived from each unselected part of available information to represent an evolution of the environment content over time.

Then, each of the sensing units 1, 2 may check whether its unselected information and/or its determined motion field has significant and/or novel information content, and if any it may send a report on this information content to the central unit 100 for further analysis by this latter. The step sequence that is displayed in Figure 3, possibly completed with the above processing and transmission of the unselected part of the available information, may be repeated multiple times as a continuous process execution. If any, the transmitted content that has been derived from the unselected part of the available information may be used as additional inputs for the central unit 100 when determining the selections SEL1 and SEL2 in the next execution of step ST4.

As a variant, the requests RQ1 may no longer be used and the sensing units 1 and 2 may periodically send messages CH(PAI1) and CH(PAI2) that each contain a characterization of an updated proposed available information. After reception of one of these messages, the central unit 100 issues the request RQ2(SEL1), RQ2(SEL2) as before and the process continues in the same way.

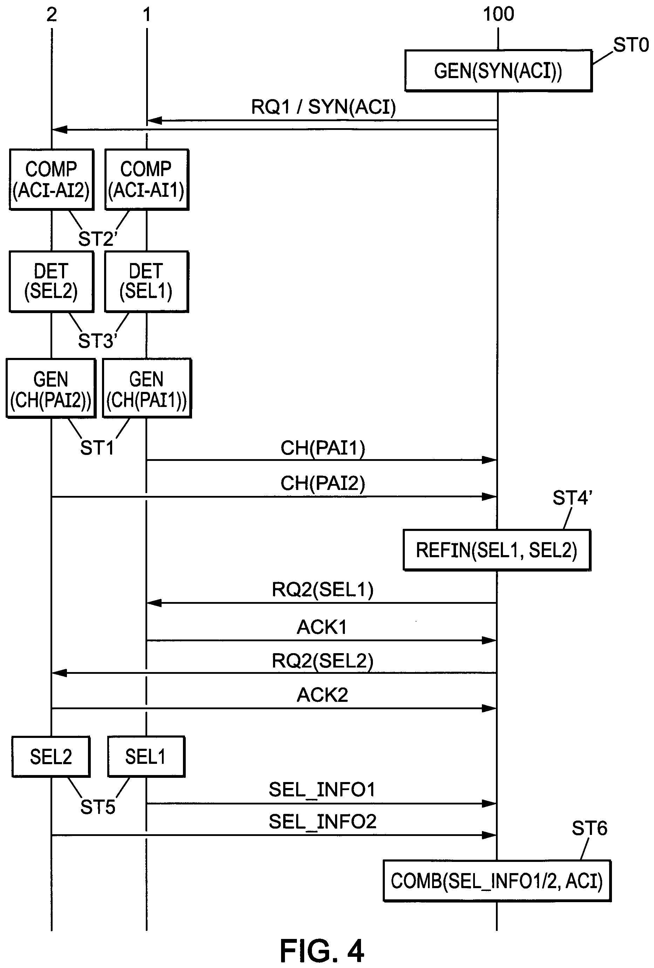

Figure 4 corresponds to Figure 3 for a second implementation suitable for the selections SEL1 and SEL2 to be respectively determined at the sensing units 1 and 2 instead of the central unit 100. Description elements already provided that are still relevant are not repeated but using them if necessary or beneficial for the contemplated application will be obvious. In this second implementation, the request RQ1 that is first sent by the central unit 100 to the sensing units 1 and 2 contains a synthesis of information that has already been collected by the central unit 100, denoted SYN(ACI). Alternatively, sending of this synthesis of the already-collected information SYN(ACI) may constitute the request RQ1 per se. To this end, the synthesis of the already-collected information SYN(ACI) is generated in a preceding step ST0 executed by the central unit 100. Possibly, the synthesis may indicate that no information has been already collected, for example when starting information collection. The synthesis of the already-collected information ACI may have any form, including at least one among an indication of portions of the environment E concerned with sensing results that have already been transmitted to the central unit 100, a resolution indication, an extent of the sensing field, an indication of the collection time for at least part of the already-collected information, a sampling or compression applied to the already-collected information, an indication of at least one already-recognized object, an indication of a target being tracked, etc. The compression algorithms mentioned above in connection with step ST1 may also be used in step ST0, but with the already-collected information. The synthesis of the already-collected information SYN(ACI) may be sent to the sensing units 1 and 2 using either unicast or multicast transmission. Transmission thereof may be performed through the bidirectional control radio channel. When more than two sensing units are used, another option is to statistically define groups of sensing units, for example during the initial registration step, based on their respective locations or based on different tracking areas. Still another option is to group the sensing units from base stations they are linked to, the coverages of the base stations then defining the broadcast areas. Each sensing unit, including those labelled 1 and 2 in the figures, proceeds in parallel with comparing the already-collected information ACI with information that is currently available at this sensing unit, denoted AI1 (resp. AI2) for sensing unit 1 (resp. sensing unit 2). This comparison step is labelled ST2' and noted COMP(ACI-AI1) for sensing unit 1 and COMP(ACI-AI2) for sensing unit 2. In next step ST3' denoted DET(SEL1) (resp. DET(SEL2)), sensing unit 1 (resp. sensing unit 2) determines a respective selection SEL1 (resp. SEL2) that could be applied to information, i.e. sensing results, which is available at this sensing unit. This selection may be determined for enriching the already-collected information ACI based on the characterization thereof as previously received, and possibly further based on additional criteria such as a resolution and/or a coverage to be obtained, a target to be tracked, etc. Radiocommunication, processing and storage requirements if any are also to be considered in step ST3'. Again, the selection is intended to be applied with sensing results already obtained by the sensing unit and/or sensing results to be obtained by the sensing unit using controllable sensing parameters such as pointing direction, field of view, resolution, etc. The determined selection SEL1 (resp. SEL2) constitutes the proposed available information in the present second implementation, and a characterization thereof is then generated in step ST1 similarly as in the first implementation of Figure 3, and transmitted by the sensing unit 1 (resp. sensing unit 2) to the central unit 100 in the message CH(PAI1) (resp. CH(PAI2)). After reception of these messages CH(PAI1) and CH(PAI2), the central unit 100 may refine the selection, for example about criteria such as resolution, coverage, extent of the sensing field, identified target, etc, in particular considering the respective characterizations received from all the sensing units, for exploiting redundancy in a useful manner. This selection refinement step is labelled ST4' and noted REFIN(SEL1, SEL2). The refined or accepted selections are expressed by the central unit 100 to the sensing unit 1 (resp. sensing unit 2) in the request RQ2(SEL1) (resp. RQ2(SEL2)), and the process is continued as in the first implementation of Figure 3 with step ST5 and next steps and the already described transmissions. The communication sequence that is displayed in Figure 4 may also be repeated multiple times as a continuous process execution.

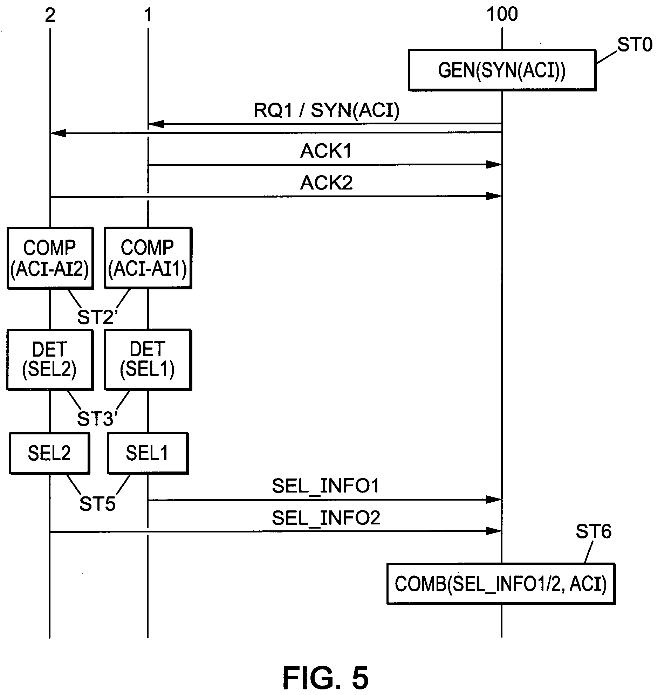

Figure 5 corresponds to Figure 4 for a third implementation in which the selections SEL1 and SEL2 are determined again at the sensing units 1 and 2. This third implementation is obtained from the second one by skipping the step ST1 of generating the characterizations of proposed available information and of transmission of the messages CH(PAI1) (resp. CH(PAI2)) by the sensing unit 1 (resp. sensing unit 2), and also skipping the steps ST4' of refining or accepting the selections SEL1 and SEL2 by the central unit 100 and of transmitting the requests RQ2(SEL1) and RQ2(SEL2). Such third implementation allows suppressing any participation of the central unit 100 in the information selection determination, the selections being then fully and separately determined at the sensing units. In such third implementations, each sensing unit 1, 2 determines the respective selection SEL1, SEL2 to be applied to information available at this sensing unit once it has received the request RQ1 that includes the synthesis SYN(ACI) of the information already collected by the central unit 100. The sensing unit 1 (resp. sensing unit 2) sends the acknowledgment ACK1 (resp. ACK2) responsive to the request RQ1. Steps ST2' and ST3' are executed as in the second implementation, and the selection SEL1 (resp. SEL2) is straight applied by the sensing unit 1 (resp. sensing unit 2) in step ST5. The sensing unit 1 (resp. sensing unit 2) can directly implement the determined selection SEL1 (resp. SEL2) with the information it has or with the sensing parameters to use for the next measurements, in step ST5. The so-selected information content SEL_INFO1 (resp. SEL_INFO2) is then transmitted by the sensing unit 1 (resp. sensing unit 2) to the central unit 100 without any further request or other action from the latter being necessary. Possibly, each sensing unit may repeat the steps ST2', ST3' and ST5 and sending the resulting selected information content several times before it receives a new synthesis SYN(ACI) from the central unit 100. Such third implementations assign maximum decision autonomy to the sensing units but may lead to less consistency between the information contents collected from the plurality of sensing units. The communication sequence that is displayed in Figure 5 may also be repeated multiple times as a continuous process execution.

Although the invention has been described for applications where the collected information is comprised of sensing results obtained by performing measurements on an environment content, it may be advantageously used for any application involving information collection from at least one remote unit.

## Claims

1. A process for collecting information by a central unit (100) from at least one remote unit (1, 2) through a radiocommunication link (20) that connects the central unit with the remote unit, wherein the remote unit sends to the central unit at least part of an information that is available at said remote unit, then said central unit combines the sent part of the available information with an already-collected information,
the process being **characterized in that** the part of the available information (SEL_INFO1, SEL_INFO2) sent by the remote unit (1, 2) results from a selection applied to the information available at said remote unit or applied to at least one information obtaining parameter implemented by said remote unit, the selection being determined for the sent part of the available information to meet at least one among information-related requirements, radiocommunication requirements, processing requirements and storage requirements.

2. The process of claim 1, wherein the selection is determined so as to optimize a redundancy of the part of the available information (SEL_INFO1, SEL_INFO2) sent by the remote unit (1, 2) with respect to an already-collected information and possibly also with respect to at least one another information part to be sent by at least one another remote unit to the central unit (100).

3. The process of claim 1 or 2, comprising the following steps:
- sending of a characterization of a proposed available information (CH(PAI1), CH(PAI2)) by the remote unit (1, 2) to the central unit (100); then
- by the central unit (100), determining the selection based on the characterization of the proposed available information (CH(PAI1), CH(PAI2)); then
- responsive to the characterization of the proposed available information (CH(PAI1), CH(PAI2)), sending of a request for information to be collected (RQ2(SEL1), RQ2(SEL2)), by the central unit (100) to the remote unit (1, 2), the request containing a characterization of the selection;
- by the remote unit (1, 2): selecting the part of the available information (SEL_INFO1, SEL_INFO2) by implementing the selection with information available at said remote unit, and sending the selected part of the available information to the central unit (100) responsive to the request (RQ2(SEL1), RQ2(SEL2)); then
- by the central unit (100): combining the selected part of the available information (SEL_INFO1, SEL_INFO2) with already-collected information.

4. The process of claim 1 or 2, comprising the following steps:
- sending of a synthesis of already-collected information (SYN(ACI)) by the central unit (100) to the remote unit (1, 2); then
- by the remote unit (1, 2), determining the selection based on the synthesis of the already-collected information (SYN(ACI)); then
- responsive to the synthesis of the already-collected information (SYN(ACI)), sending of a characterization of a proposed available information (CH(PAI1), CH(PAI2)) by the remote unit (1, 2) to the central unit (100), the proposed available information corresponding to the selection; then
- by the central unit (100), confirming or refining the selection to be applied for obtaining the part of the available information (SEL_INFO1, SEL_INFO2) to be sent based on the characterization of the proposed available information (CH(PAI1), CH(PAI2)); then
- responsive to the characterization of the proposed available information (CH(PAI1), CH(PAI2)), sending by the central unit (100) to the remote unit (1, 2), of a request (RQ2(SEL1), RQ2(SEL2)) that contains a characterization of the confirmed or refined selection; then
- by the remote unit (1, 2): selecting the part of the available information (SEL_INFO1, SEL_INFO2) by implementing the confirmed or refined selection, and sending the selected part of the available information to the central unit (100) responsive to the request (RQ2(SEL1), RQ2(SEL2))
- by the central unit (100): combining the selected part of the available information (SEL_INFO1, SEL_INFO2) with the already-collected information.

5. The process of claim 1 or 2, comprising the following steps:
- sending of a synthesis of already-collected information (SYN(ACI)) by the central unit (100) to the remote unit (1, 2), in a request or as a request (RQ1) for information to be collected; then
- by the remote unit (1, 2), determining the selection based on the synthesis of the already-collected information (SYN(ACI)), selecting the part of the available information (SEL_INFO1, SEL_INFO2) by implementing the selection, and sending the selected part of the available information to the central unit (100) responsive to the synthesis of the already-collected information; then
- by the central unit (100): combining the selected part of the available information (SEL_INFO1, SEL_INFO2) with the already-collected information.

6. The process of one of the preceding claims, wherein:
the information collected by the central unit (100) comprises map data relating to elements existing in an environment (E) of the remote unit (1, 2), and
the information available at the remote unit (1, 2) comprises sensing results obtained by said remote unit performing measurements of the environment (E).

7. The process of claim 6, wherein the sensing results obtained by the remote unit (1, 2) form a point cloud.

8. The process of claim 6 or 7, wherein the remote unit (1, 2) is equipped with a sensing system (11) for performing the measurements, such that each sensing result comprises coordinates of at least one point in the environment (E) where a radiation-reflecting or radiation-diffusing element has been sensed by the sensing system, said sensing system being at least one of a LiDAR system, a depth camera system, a three-dimensional camera system, a stereo imaging system and a radar system.

9. The process of one of claims 3 to 5 and one of claims 6 to 8, wherein a step sequence that comprises transmission of at least one of the characterization of the proposed available information (CH(PAI1), CH(AI2)) and the synthesis of the already-collected information (SYN(ACI)), and the sending of the selected part of the available information (SEL_lNFO1, SEL_INFO2), is performed repetitively in real time or almost real time with respect to the measurements performed by the remote unit (1, 2) on the environment (E).

10. The process of claim 3 or 4 and one of claims 6 to 9, wherein the characterization of the proposed available information (CH(PAI1), CH(AI2)) comprises at least one of a pointing direction within a sensing field of the remote unit (1, 2) for the measurements on the environment (E), an extent of the sensing field of the remote unit for the measurements on the environment, a resolution or definition or density of the measurements on the environment, a sampled or compressed version of the sensing results obtained by the remote unit, an indication of a sub-portion of the environment, and an indication of at least one element recognized in the environment.

11. The process of claim 4 or 5 and one of claims 6 to 9, wherein the synthesis of the already-collected information (SYN(ACI)) comprises a sampled or compressed version of said already-collected information.

12. The process of one of claims 1 to 11, wherein the selected part of the available information (SEL_INFO1, SEL_INFO2) that is sent by the remote unit (1, 2) to the central unit (100) is a subset of information data that have been obtained by the remote unit before the selection is determined.

13. The process of one of claims 1 to 11, wherein the selected part of the available information (SEL_INFO1, SEL_INFO2) that is sent by the remote unit (1, 2) to the central unit (100) is obtained by said remote unit after the selection is determined, the selection being applied to at least one information obtaining parameter implemented by said remote unit.

14. An information collecting system comprising a central unit (100) and at least one remote unit (1, 2) each provided with radiocommunication means,
the central unit (100) comprising a combiner module configured for combining newly-received information with already-collected information,
the central unit (100) and/or each remote unit (1, 2) comprising a selection determination module configured for determining a selection to be applied to information available at the remote unit, and
each remote unit (1, 2) comprising a selection module configured for implementing the selection with the information available at said remote unit so as to select a part of said available information (SEL_INFO1, SEL_INFO2) to be sent to the central unit (100),
wherein the central unit (100) and the at least one remote unit (1, 2) are configured for implementing a process according to one of the preceding claims.

15. The system of claim 14, wherein the at least one remote unit (1, 2) comprises a remote unit that is fixedly located in an environment (E), or forms a mobile unit, preferably an unmanned mobile unit, in particular an unmanned aerial vehicle.
